# EUROPÄISCHE PATENTSCHRIFT

(11) **EP 0 431 713 B1**
(45) Veröffentlichungstag und Bekanntmachung des Hinweises auf die Patenterteilung: **08.06.1994**
(21) Anmeldenummer: 90250290.5
(22) Anmeldetag: 23.11.1990
(51) Int. Cl.: B66C 1/12, F16G 15/00, F16G 15/04

(54) **Bauteil für Kettengehänge**
Construction element for chain suspensions
Elément de construction pour suspensions à chaîne

(30) Priorität: 23.11.1989 DE 3938984
(43) Veröffentlichungstag der Anmeldung: 12.06.1991
(73) Patentinhaber: RUD-Kettenfabrik Rieger & Dietz GmbH u. Co., D-73406 Aalen (DE)
(72) Erfinder: Smetz, Reinhard, Dipl.-Ing. (FH), W-8860 Baldingen (DE)
(74) Vertreter: Böning, Manfred, Dr.-Ing.

(56) Entgegenhaltungen:
- BE-A- 496 698
- DE-A- 3 403 343
- DE-A- 3 723 173
- DE-A- 3 903 138
- DE-U- 8 518 630
- FR-A- 2 307 751
- US-A- 2 519 460

## Beschreibung

Die Erfindung betrifft ein Bauteil für Kettengehänge mit einem Anschlußorgan für das Ende mindestens eines mit einem Hebezeug verbindbaren Lastaufnahmemittels, einem fluchtend zum Anschlußorgan angeordneten Haken und einem Träger mit Verkürzungsvorrichtungen für Kettenstränge.

Aus der BE-A- 496 698 ist ein Bauteil der vorstehenden Art bekannt, bei dem ein tellerförmiger Träger an seinem Umfang mit nach außen offenen radialen Schlitzen und jeweils quer zu diesen Schlitzen verlaufenden Stützmulden für die Rundung eines Kettengliedes versehen ist, das mit einem in den jeweiligen Schlitz eingeführten Kettenglied eines verkürzbaren Kettenstranges verbunden ist. Um den Kettenstrang zu verkürzen, muß er bei diesem Bauteil vom Träger getrennt und erneut wieder eingehängt werden, so daß ein Zusammenhalt des Trägers und der Kettenstränge bei deren Verkürzung nicht gegeben ist und beim Einstellvorgang die Gefahr des Abrutschens eines Kettenstranges insbesondere bei einer Schieflage des Trägers besteht. Nicht zu befriedigen vermag bei dem bekannten Bauteil zudem der Umstand, daß sein Anschlußorgan drehfest mit dem Haken verbunden ist und Anschlußorgan und Haken folglich nicht unabhängig voneinander in unterschiedliche Winkelpositionen gegenüber dem Träger überführbar sind. Bekannt ist außerdem aus der Firmendruckschrift Gü-EHB/f/6.89/Wa der Anmelderin ein als Doppelwirbel ausgebildetes Bauteil für Kettengehänge, dessen Träger mit zwei sich gegenüberliegenden Gabelköpfen zum Anschluß eines Endgliedes jeweils eines kurzen Kettenstranges versehen ist, dessen anderes Endglied mit einer Verkürzungsvorrichtug für jeweils einen zusätzlichen Kettenstrang ausgestattet ist, der an mindestens einem seiner Enden einen weiteren Haken aufweist. Bei Einsatz dieses zweiten bekannten Bauteiles können sich in Fällen Probleme ergeben, in denen die Raumverhältnisse ungünstig sind. Der Grund hierfür besteht darin, daß der Abstand zwischen dem Anschlußorgan für das jeweilige Lastaufnahmemittel und dem weiteren Haken des zusätzlichen Kettenstranges infolge der zwischen die Gabelköpfe und die zusätzlichen Kettenstränge geschalteten kurzen Kettenstränge verhältnismäßig groß ist. Letzteres kann sich insbesondere beim Untertageeinsatz als störend erweisen. Hinzu kommt, daß die unter Verwendung der bekannten Bauteile zusammengestellten Gehänge zwar den Vorteil bieten, daß sie mit unterschiedlichen und austauschbaren Verkürzungsvorrichtungen ausgestattet werden können, daß dieser Vorteil indes mit einer vergleichsweise sperrigen und schweren Bauweise des jeweiligen Gehänges erkauft werden muß.

Der Erfindung liegt die Aufgabe zugrunde, ein Bauteil der in Betracht gezogenen Art zu schaffen, das die Vorteile der beiden zuvor beschriebenen Bauteile in sich vereint. Diese Aufgabe wird erfindungsgemäß dadurch gelöst, daß das Bauteil als eine Drehung des Anschlußorganes sowohl gegenüber dem Träger als auch gegenüber dem Haken zulassender Doppelwirbel ausgebildet ist und die Verkürzungsvorrichtungen mit Durchziehöffnungen für die Kettenstränge versehen sind.

Durch die Verwendung von Verkürzungsvorrichtungen mit einer Durchziehöffnung sind die Voraussetzungen für eine unverlierbare Verbindung der Kettenstränge mit dem Bauteil geschaffen, indem man die Enden der Kettenstränge mit Organen versieht, die die Durchziehöffnungen nicht passieren können. Die Doppelwirbelausbildung des Bauteiles fördert dessen leichte Handhabbarkeit, indem sie eine schnelle Anpassung der Lage der Kettenstränge an die Anschlußpunkte der jeweils anzuhebenden Last ermöglicht.

Weitere Einzelheiten und Merkmale der Erfindung ergeben sich aus der nachstehenden Beschreibung mehrerer in der beigefügten Zeichnung dargestellter Ausführungsbeispiele. Es zeigen:
- Fig. 1: teilweise im Schnitt eine Seitenansicht eines ersten Bauteiles;
- Fig. 2: teilweise im Schnitt die Draufsicht auf das Bauteil gemäß Fig. 1;
- Fig. 3: in vergrößertem Maßstab eine Einzelheit der Verkürzungsvorrichtung des Bauteiles gemäß Fig. 1 und 2;
- Fig. 4: einen Schnitt längs der Linie IV-IV in Fig. 2;
- Fig. 5: teilweise im Schnitt eine Seitenansicht eines zweiten Bauteiles;
- Fig. 6: teilweise im Schnitt die Draufsicht auf das Bauteil gemäß Fig. 5;
- Fig. 7: teilweise im Schnitt eine Teilseitenansicht eines dritten Bauteiles;
- Fig. 8: teilweise im Schnitt die Draufsicht auf das Bauteil gemäß Fig. 7;
- Fig. 9: teilweise im Schnitt die Seitenansicht eines vierten Bauteiles und
- Fig. 10: die Draufsicht auf das Bauteil gemäß Fig. 9.

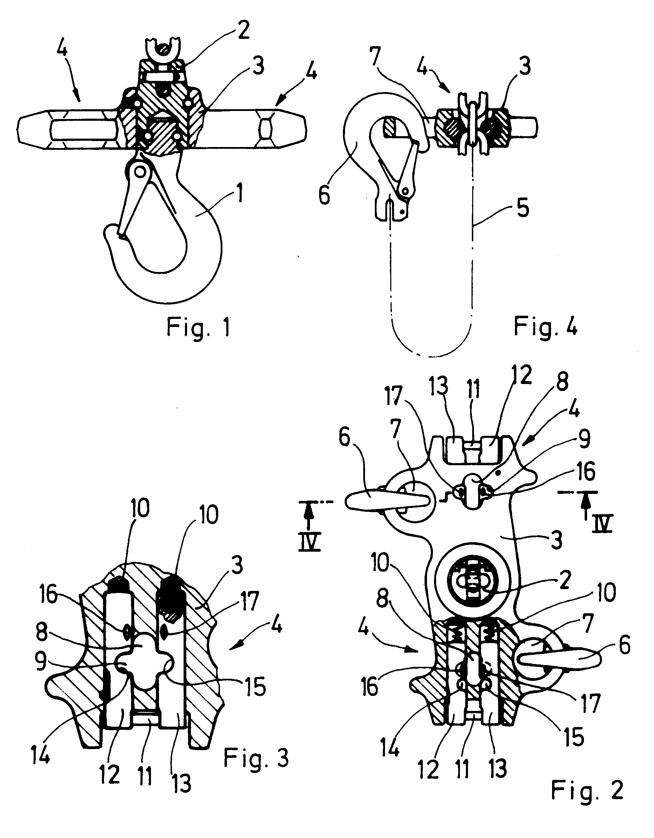

Das in den Figuren 1 - 4 dargestellte Bauteil hat den Aufbau eines Doppelwirbels, der im wesentlichen aus einem von einem Haken 1 gebildeten Innenteil, einem als Anschlußorgan 2 ausgebildeten Mittelteil und einem Außenteil besteht, das einen Träger 3 bildet, der zwei Verkürzungsvorrichtungen 4 aufweist. Die Verkürzungsvorrichtungen 4 dienen zur unverlierbaren Aufnahme verkürzbarer Kettenstränge 5, die an mindestens einem Ende mit jeweils einem Haken 6 versehen sind, und deren Teilung kleiner oder gleich t = 3d ist, wobei d das Maß für die Dicke der Kettenglieder ist. In Fig. 2 ist angedeutet, daß sich die Haken 6 zur Kranzkettenbildung in Halteösen 7 einhängen lassen.

Die Verkürzungsvorrichtungen 4 weisen zwei sich kreuzende Führungsschlitze 8,9 auf, die eine Durchziehöffnung für die Kettenstränge 5 bilden, wenn zwei gegen die Wirkung von Rückstellfedern 10 verschiebbare über einen Steg 11 miteinander verbundene Arretierbolzen 12,13 den Führungsschlitz voll freigeben, wie dies in Fig. 3 gezeigt ist. In der Freigabeposition decken sich zwei Nuten 14, 15 der Arretierbolzen 12,13 mit den Rundungen in den Endbereichen des Führungsschlitzes 9, während in der Arretierstellung in diesen Bereichen Stützmulden 16,17 der Arretierbolzen 12,13 zu liegen kommen (vgl. Fig. 2).

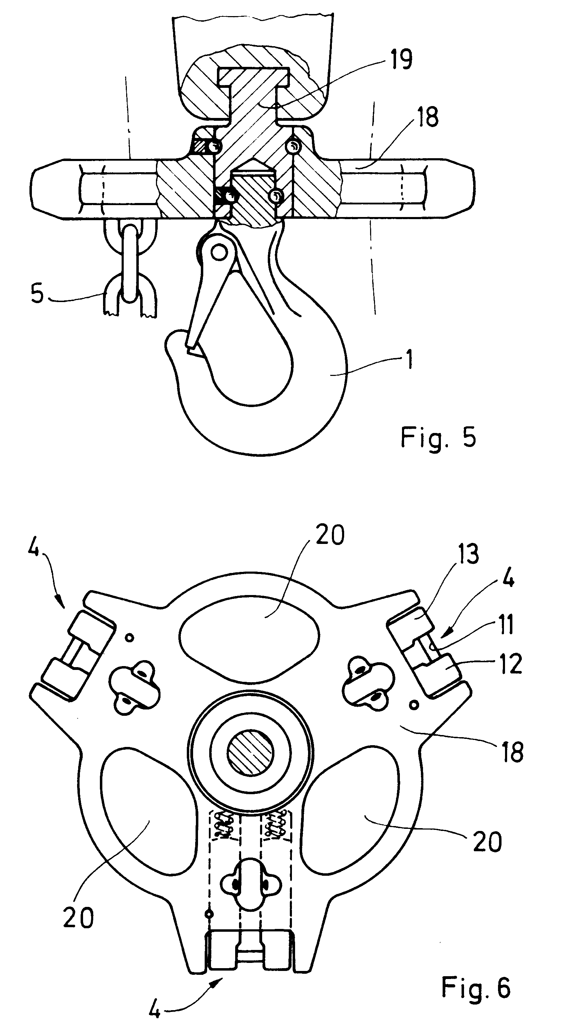

Während der Träger 3 des Bauteiles gemäß den Figuren 1 - 4 stegförmig ist, haben die Träger der Bauteile gemäß den Figuren 5 - 8 die Form einer Scheibe, die die Unterbringung einer größeren Zahl von Verkürzungsvorrichtungen gestattet und vielfältige Einsatzmöglichkeiten eröffnet.

Der Träger 18 des Bauteiles gemäß den Figuren 5 und 6 ist mit drei Verkürzungsvorrichtungen 4 ausgestattet, die den gleichen Aufbau haben wie die Verkürzungsvorrichtungen des ersten Ausführungsbeispieles. Anstelle eines als Gabelkopf ausgebildeten Anschlußorganes 2 findet hier ein pilzförmiges Anschlußorgan 19 Verwendung. Zwischen den jeweils aufeinanderfolgenden Verkürzungsvorrichtungen sind Halteösen 20 zum Einhängen hier nicht dargestellter Haken von Kettensträngen 5 angeordnet.

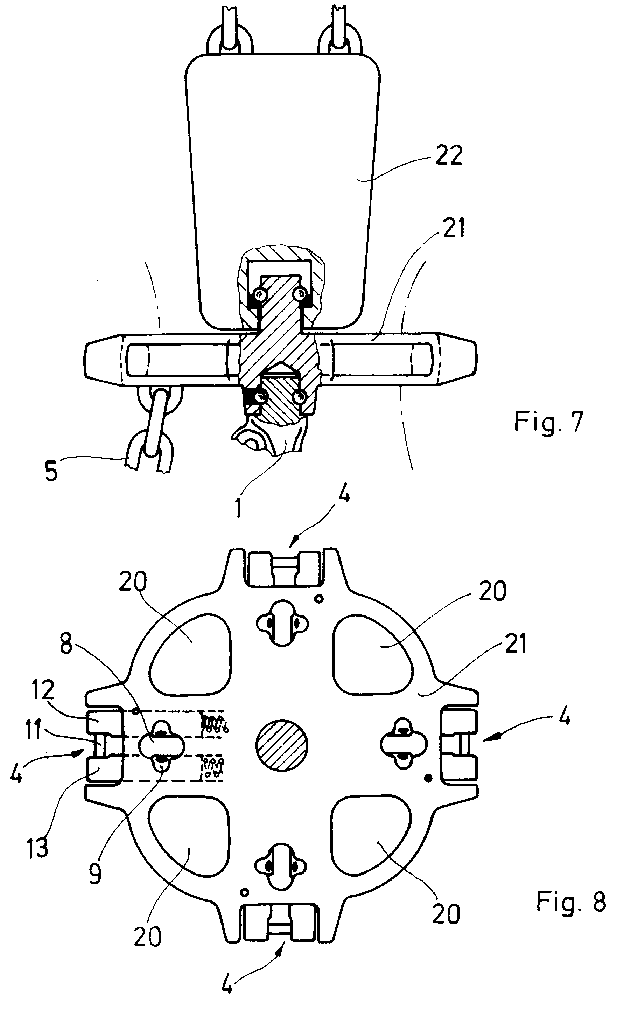

Mit dem Bauteil gemäß Fig. 7 und 8, dessen Träger 21 vier Verkürzungsvorrichtungen 4 aufweist, lassen sich nach Bedarf Zweier-, Dreier- und Vierergehänge bilden, d.h. alle praktisch sinnvollen Kombinationsmöglichkeiten realisieren. Das Anschlußorgan 22 ist bei diesem Ausführungsbeispiel nicht wie bei den zuvor beschriebenen Ausführungsformen als Mittel-, sondern als Außenteil des Doppelwirbels ausgebildet.

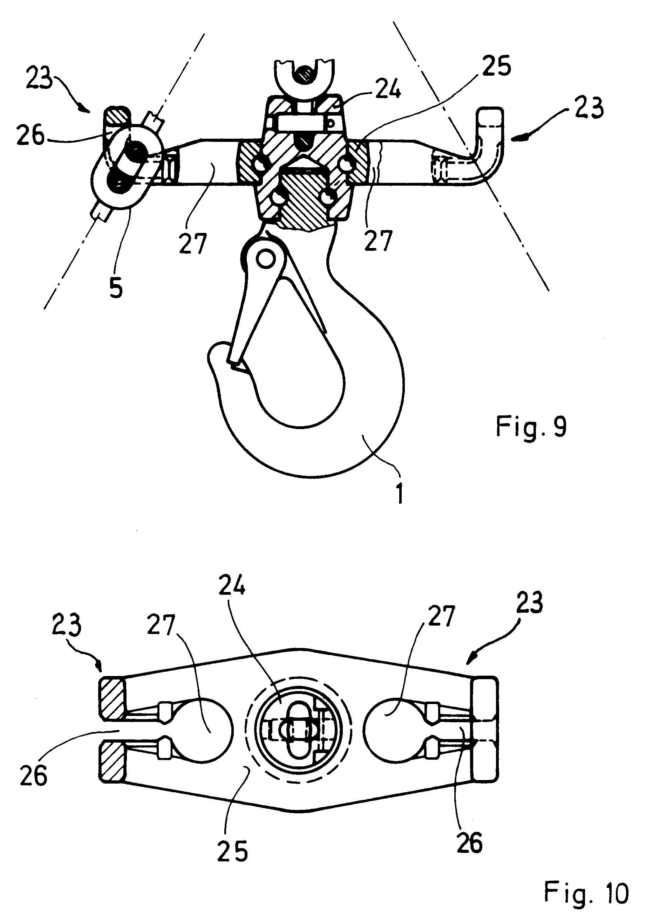

Ein besonders einfache Verkürzungsvorrichtungen 23 aufweisendes Bauteil zeigen die Fig. 9 und 10. Auf einem Anschlußorgan 24 ist hier ein Träger 25 drehbar gelagert, dessen Enden nach oben abgewinkelte Schlitze 26 bilden, die sich an jeweils eine Durchziehöffnung 27 anschließen.

## Patentansprüche

1. Bauteil für Kettengehänge mit einem Anschlußorgan (2;19;22) für das Ende mindestens eines mit einem Hebezeug verbindbaren Lastaufnahmemittels, einem fluchtend zum Anschlußorgan (2;19; 22) angeordneten Haken (1) und einem Träger (3;18;21;25) mit Verkürzungsvorrichtungen (4;23) für Kettenstränge (5), **dadurch gekennzeichnet**, daß das Bauteil als eine Drehung des Anschlußorganes (2;19;22) sowohl gegenüber dem Träger (3;18; 21;25) als auch gegenüber dem Haken (1) zulassender Doppelwirbel ausgebildet ist und die Verkürzungsvorrichtungen (4; 23) mit Durchziehöffnungen (8;9;27) für die Kettenstränge (5) versehen sind.

2. Bauteil nach Anspruch 1, dadurch gekennzeichnet, daß der Träger (3) mit eine Kranzkettenanordnung ermöglichenden Halteösen (7;20) zum Einhängen von an den Enden der verkürzbaren Kettenstränge (5) angeordneten Haken versehen ist.

3. Bauteil nach Anspruch 1 oder 2, dadurch gekennzeichnet, daß der Träger (18;21) mindestens drei Verkürzungsvorrichtungen (4) aufweist.

4. Bauteil nach einem der Ansprüche 1 bis 3, dadurch gekennzeichnet, daß der Träger (18,21) scheibenförmig ausgebildet ist.

5. Bauteil nach Anspruch 4, dadurch gekennzeichnet, daß zwischen zwei aufeinanderfolgenden Verkürzungsvorrichtungen (4) jeweils eine Halteöse (7;20) zum Einhängen eines Hakens (6) angeordnet ist.

6. Bauteil nach einem der Ansprüche 1 bis 5, dadurch gekennzeichnet, daß die Verkürzungsvorrichtungen (4) jeweils zwei sich kreuzende Führungsschlitze (8,9) für die Kettenstränge (5) aufweisen und jeweils einem (9) der beiden Führungsschlitze (8,9) mindestens ein gegen die Wirkung mindestens einer Rückstellfeder (10) verschiebbare Arretierungsbolzen (12,13) für jeweils ein Glied jeweils eines Kettenstranges (5) zugeordnet ist.

7. Bauteil nach einem der Ansprüche 1 bis 5, dadurch gekennzeichnet, daß die Verkürzungsvorrichtungen (23) jeweils einen sich an ihrer Durchziehöffnung (27) anschließenden Arretierungsschlitz (26) aufweisen.

8. Bauteil nach Anspruch 7, dadurch gekennzeichnet, daß die Arretierungsschlitze (26) gegenüber der Durchziehöffnung (27) nach oben abgewinkelt sind.

9. Bauteil nach Anspruch 7 oder 8, dadurch gekennzeichnet, daß die Durchziehöffnungen (27) zwischen den Arretierungsschlitzen (26) und einem zentralen Ringteil des Trägers (25) angeordnet sind.

## Claims

1. A component for a chain suspension comprising means (2; 19; 22) for connecting the end of at least one load-lifting member to a lifting apparatus, a hook (1) disposed in line with the connecting means (2; 19; 22), and a holder (3; 18; 21; 25) with shortening means (4; 23) for chain strands (5), characterised in that the component is a double swivel permitting rotation of the connecting member (2; 19; 22) relative to the holder (3; 18; 21; 25) and also relative to the hook (1), and the shortening devices (4; 23) are formed with openings (8; 9; 27) for pulling through the chain strands (5).

2. A component according to claim 1, characterised in that the holder (3) comprises eyelets (7; 20) into which hooks disposed at the ends of the shortenable chain strands (5) can be suspended to form a chain-ring arrangement.

3. A component according to claim 1 or claim 2, characterised in that the holder (18; 21) has at least three shortening devices (4).

4. A component according to any one of claims 1 to 3, characterised in that the holder (18; 21) is disc-shaped.

5. A component according to claim 4, characterised in that an eyelet (7; 20) for suspending a hook (6) is disposed between each pair of successive shortening devices (4).

6. A component according to any one of claims 1 to 5, characterised in that the shortening devices (4) each comprise two intersecting guide slots (8, 9) for the chain strands (5) and a respective one (9) of the two guide slots (8, 9) is associated with at least one bolt (12, 13) for locking at least one link of one chain strand (5), the bolt being movable against the action of at least one restoring spring (10).

7. A component according to any one of claims 1 to 5, characterised in that each shortening device (23) is formed with a locking slot (26) adjacent to the pull-through opening (27).

8. A component according to claim 7, characterised in that the locking slots (26) are bent upwards relative to the pull-through opening (27).

9. A component according to claim 7 or claim 8, characterised in that the pull-through openings (17) are disposed between the locking slots (26) and a central annular part of the holder (25).

## Revendications

1. Elément pour suspension de chaîne comprenant un organe de raccordement (2 ; 19 ; 22) pour l'extrémité d'au moins un moyen de support de charge pouvant être relié à un engin de levage, un crochet (1) disposé dans l'alignement de l'organe de raccordement (2 ; 19 ; 22) et un support (3 ; 18 ; 21 ; 25) muni de dispositifs de raccourcissement (4 ; 23) pour brins de chaîne, caractérisé en ce que l'élément est constitué par un double émerillon qui permet une rotation de l'organe de raccordement (2 ; 19 ; 22) aussi bien par rapport au support (13 ; 18 ; 21 ; 25) que par rapport au crochet (1) et les dispositifs de raccourcissement (4 ; 23) sont munis d'ouvertures de passage (8 ; 9 ; 27) pour les brins de chaîne (5).

2. Elément selon la revendication 1, caractérisé en ce que le support (3) est muni d'oeillets de retenue (7 ; 20) permettant une disposition de chaînes en couronne et destinés à suspendre des crochets disposés aux extrémités des brins de chaîne (5) pouvant être raccourcis.

3. Elément selon la revendication 1 ou 2, caractérisé en ce que le support (18 ; 21) présente au moins trois dispositifs de raccourcissement (4).

4. Elément selon une des revendications 1 à 3, caractérisé en ce que le support (18, 21) présente la forme d'un disque.

5. Elément selon la revendication 4, caractérisé en ce qu'un oeillet de retenue (7 ; 20) destiné à la suspension d'un crochet (6) est agencé entre deux dispositifs de raccourcissement (4) successifs.

6. Elément selon une des revendications 1 à 5, caractérisé en ce que les dispositifs de raccourcissement (4) présentent chacun deux fentes de guidage (8, 9) qui se croisent pour les brins de chaîne (5) et qu'à chacune (9) des deux fentes de guidage (8, 9) est associé au moins une goupille d'arrêt (12, 13) prévue pour un maillon d'un brin de chaîne (5), qu'on peut faire coulisser à l'encontre de l'action d'au moins un ressort de rappel (10).

7. Elément selon une des revendications 1 à 5, caractérisé en ce que les dispositifs de raccourcissement (23) présentent chacun une fente d'arrêt (26) qui se raccorde à son ouverture de passage (27).

8. Elément selon la revendication 7, caractérisé en ce que les fentes d'arrêt (26) sont coudées vers le haut par rapport à l'ouverture de passage (27).

9. Elément selon la revendication 7 ou 8, caractérisé en ce que les ouvertures de passage (27) sont disposées entre les fentes d'arrêt (26) et une partie annulaire centrale du support (25).
